# EUROPEAN PATENT SPECIFICATION

(11) **EP 1 350 048 B1**
(45) Date of publication and mention of the grant of the patent: **02.11.2006**
(21) Application number: 01270721.2
(22) Date of filing: 13.12.2001
(51) Int. Cl.: F16K 31/00

(54) **A THERMALLY RESPONSIVE VALVE**
TEMPERATURABHÄNGIGES VENTIL
SOUPAPE SENSIBLE A LA CHALEUR

(30) Priority: 13.12.2000 IE 001003
(43) Date of publication of application: 08.10.2003
(73) Proprietor: OGLESBY & BUTLER, RESEARCH & DEVELOPMENT LIMITED, Carlow (IE)
(72) Inventor: OGLESBY, Alfred, Peter, Carlow (IE); OGLESBY, John, Paul, Carlow (IE); TOWNSEND, John, Carlow (IE); GRIFFIN, Michael, John, Carlow (IE)
(74) Representative: Gorman, Francis Fergus
(86) International application number: PCT/IE2001/000154
(87) International publication number: WO 2002/048591

(56) References cited:
- GB-A- 1 468 069
- US-A- 4 318 070

## Description

The present invention relates to a thermally responsive valve, and in particular, to a thermally responsive valve for controlling fluid flow in response to temperature, and - in particular, though not limited to, a thermally responsive valve for controlling the flow of fuel gas to a gas powered appliance in response to temperature, for example, the temperature of the appliance.

Thermally responsive valves for controlling a fluid, for example, a liquid, air, fuel gas and the like are known. It is also known to provide such thermally responsive valves with a valving member located within the valve for controlling the flow of fuel gas through the valve wherein the valving member is provided by a bi-metal member, for example, a bi-metal strip or a bi-metal concave disc. Such valves typically are provided for controlling a flow of fluid to a body member which is heated, and typically, the valve comprises a valve housing of heat conductive material which is in heat conductive engagement with the body member, the temperature of which is to be controlled, or to which the delivery of the fluid is to be delivered in response to the temperature of the body member. The bi-metal valving member is also located in heat transfer communicating relationship with the valve housing so that the bi-metal valving member and the valve housing are maintained at a substantially similar temperature to that of the body member, the temperature of which is to be controlled.

British Patent specification No. 1,468,069 discloses such a thermally responsive valve for controlling an air supply to an engine in response to the temperature of the engine block. The valve comprises a valve housing which is in heat conducting engagement with the engine block. A bi-metal valving member in the form of a circular concave bi-metal disc is located in a valving chamber defined by the valve housing. The bi-metal disc has an upper transition temperature and a lower transition temperature. The upper transition temperature is the temperature at which the bi-metal disc transitions with a snap action from a first configuration to a second configuration when the temperature of the bi-metal disc is rising. In the first configuration the bi-metal disc is concave when viewed from one side, and in the second configuration the bi-metal disc is concave when viewed from the opposite side. In other words, the second configuration is a mirror image of the first configuration. The lower transition temperature is the temperature of the bi-metal disc at which the bi-metal disc transitions from the second configuration to the first configuration as the temperature of the bi-metal disc is falling. The upper transition temperature is a higher temperature than the lower transition temperature.

In the first configuration the valve is open for permitting the flow of air therethrough to the engine. On reaching its upper transition temperature and transitioning to the second configuration with a snap action, the bi-metal disc closes the valve, thereby isolating the engine from the supply of air. The valve remains closed until the temperature of the bi-metal disc drops to its lower transition temperature, at which stage the bi-metal disc transitions with a snap action from the second to the first configuration. Accordingly, the valve disclosed in this British specification is suitable for digital control of the air supply only, in other words, it either operates in a fully open or a fully closed state. The valve is unsuitable for analogue control of the air flow through the valve, in other words, the valve is unsuitable for modulating the flow of air through the valve in response to the temperature of the engine.

It is, however, suggested in the British Patent specification that by providing a bi-metal concave disc with slots provided at respective diametrically opposite sides of the disc, the bi-metal disc could be used to modulate the flow of air in response to temperature. However, by forming slots in the bi-metal disc, it is believed that the bi-metal disc would no longer act as a conventional bi-metal disc which operates about upper and lower transition temperatures. Accordingly, the accuracy with which the slotted bi-metal disc could modulate the air flow, if at all, in response to temperature would be relatively poor.

There is therefore a need for a thermally responsive valve which overcomes these problems.

The present invention is directed towards providing such a thermally responsive valve.

According to the invention there is provided a thermally responsive valve comprising a valve housing defining a valving chamber, a thermally responsive bi-metal valving means for controlling fluid flow through the valving chamber in response to temperature, the valving means having a predetermined transition temperature at which the valving means transitions from a first configuration to a second configuration, the second configuration being substantially a mirror image of the first configuration, wherein the valving means is supported by a support means at at least two spaced apart locations respectively spaced apart from the centre of the valving means for constraining movement of the valving means in the valving chambers for preventing transitioning of the valving means from the first configuration to the second configuration, but permitting limited movement of the valving means to control fluid flow through the valving chamber in response to temperature.

Preferably, the valving means is responsive to temperature for controlling the fluid flow through the valving chamber with an analogue controlling action.

In one embodiment of the invention the valving means is responsive to temperature within a predetermined temperature range adjacent the transition temperature for controlling fluid flow through the valving chamber.

In another embodiment of the invention the valving means is responsive to temperature in a predetermined temperature range below the transition temperature of the valving means for controlling fluid flow through the valving chamber.

In a further embodiment of the invention the valving means is responsive to temperature in a predetermined temperature range which is just below the transition temperature of the valving means for controlling fluid flow through the valving chamber.

In another embodiment of the invention the valving means is responsive to temperature in a predetermined temperature range above the transition temperature of the valving means for controlling fluid flow through the valving chamber.

In a further embodiment of the invention the valving means is responsive to temperature in a predetermined temperature range which is just above the transition temperature of the valving means for controlling fluid flow through the valving chamber.

Preferably, the transition temperature lies within a predetermined temperature range over which the valving means is responsive for controlling fluid flow through the valving chamber.

In one embodiment of the invention the valving means comprises a lower transition temperature and an upper transition temperature, the upper transition temperature being the temperature at which the valving means would transition from the first configuration to the second configuration as the temperature is rising if the valving means were unconstrained, and the lower transition temperature being the temperature at which the valving means if unconstrained would transition from the second configuration to the first configuration as the temperature is falling.

Preferably, the valving means is responsive to temperature in a temperature range between the upper transition temperature and the lower transition temperature for controlling fluid flow through the valving chamber.

In one embodiment of the invention the valving means is responsive to temperature in a predetermined temperature range not exceeding 40°C for controlling fluid flow through the valving chamber.

In another embodiment of the invention the valving means is responsive to temperature in a predetermined temperature range not exceeding 20°C for controlling fluid flow through the valving chamber.

In a further embodiment of the invention the valving means is responsive to temperature in a predetermined temperature range not exceeding 10°C for controlling fluid flow through the valving chamber.

Ideally, the valving means is responsive to temperature change for controlling fluid flow through the valving chamber for maintaining the temperature substantially constant.

Preferably, the valving means is responsive to temperature change for controlling fluid flow through the valving chamber for maintaining the temperature substantially constant within a temperature range of plus or minus 5°C.

Advantageously, the valving means is responsive to temperature change for controlling fluid flow through the valving chamber for maintaining the temperature substantially constant within a temperature range of plus of minus 1°C.

In one embodiment of the invention the valving means is responsive to temperature change for controlling fluid flow through the valving chamber for maintaining the temperature substantially constant within a temperature range of plus or minus ½°C.

In another embodiment of the invention the valving means is responsive to temperature change for controlling fluid flow through the valving chamber for maintaining the temperature substantially constant at temperatures of the valving means up to 300°C.

In a further embodiment of the invention the valving means is responsive to temperature change for controlling fluid flow through the valving chamber for maintaining the temperature substantially constant at temperatures of the valving means up to 200°C.

Preferably, the valving means is shaped for determining each predetermined transition temperature.

In one embodiment of the invention the valving means is located in the valving chamber.

In another embodiment of the invention an inlet port is provided to the valving chamber for accommodating fluid to the valving chamber, and a valving outlet is provided from the valving chamber for accommodating fluid from the valving chamber.

Preferably, the valving means co-operates with one of the inlet and the outlet ports for controlling fluid flow through the valving chamber.

In another embodiment of the invention one of the inlet and outlet ports defines a valve seat, and the valving means co-operates with the valve seat for controlling fluid flow through the valving chamber.

Preferably, the valving means is co-operable with a valving element which is co-operable with the valve seat for controlling fluid flow through the valving chamber. Advantageously, the valving element is located between the valving means and the valve seat.

In one embodiment of the invention the valving element is secured to the valving means. Preferably, the valving element is co-operable with a central portion of the valving means for controlling the flow of fluid through the valving chamber.

In one embodiment of the invention the valving means is free floating within the valving chamber at room temperature.

Preferably, the valving means is supported adjacent its periphery by the support means.

In one embodiment of the invention the valving means is supported continuously around its periphery by the support means.

In another embodiment of the invention the valving means is supported by the support means at spaced apart locations around its periphery for facilitating flow of fluid from one major face of the valving means to the other.

Ideally, the support means for supporting the valving means co-operates with the valve seat for constraining the valving means from transitioning from the first to the second configuration. Preferably, the valving element co-operates with the valving means on one major face thereof, and the support means co-operates with the valving means on the opposite major face.

In one embodiment of the invention the valving means comprises a bi-metal valving disc. Preferably, the valving disc is a circular disc. Advantageously, the valving disc is a non-perforated disc.

Preferably, the valving means is of the type which would transition from the first to the second configuration with a snap action if unconstrained.

In one embodiment of the invention the valving means modulates fluid flow through the valving chamber in response to temperature.

In another embodiment of the invention the valve housing is of a heat conductive material. Preferably, the valving means is in heat transfer communication with the valve housing.

In one embodiment of the invention the valve is adapted for controlling the flow of a gaseous fluid.

In another embodiment of the invention the valve is adapted for controlling the flow of fuel gas.

In a further embodiment of the invention the valve is adapted for controlling the flow of a liquid.

In one embodiment of the invention a means is provided for adjusting the valve for varying the value about which the temperature is maintained substantially constant.

Preferably, the adjusting means comprises a means for urging the valving means towards or away from the valve seat. Advantageously, the support means for supporting the valving means forms the adjusting means and is moveable for moving the valving means towards and away from the valve seat.

In one embodiment of the invention the inlet port and the outlet port extend into the valving chamber on the same side of the valving means.

In another embodiment of the invention the outlet port extends from the valving chamber on the opposite side of the valving means to that in which the inlet port extends into the valving chamber.

Additionally the invention provides a gas powered heating appliance comprising a thermally responsive valve for controlling the supply of fuel gas to the appliance in response to temperature, wherein the thermally responsive valve comprises a thermally responsive valve according to the invention.

In one embodiment of the invention the thermally responsive valve is responsive to the temperature of the appliance.

Further the invention provides a gas powered hand tool comprising a main body member of heat conductive material, a combusting means for converting fuel gas to heat for heating the main body member, a fuel gas supply means for supplying fuel gas to the combusting means, and a thermally responsive valve for controlling the flow of fuel gas from the fuel gas supply means to the combusting means in response to temperature of the main body member, wherein the thermally responsive valve is a thermally responsive valve according to the invention.

Further, the invention provides a gas powered heating appliance comprising a combusting means for converting fuel gas to heat, a fuel gas supply means for supplying fuel gas to the combusting means, and a thermally responsive valve co-operating with the fuel gas supply means for supplying fuel gas to the combusting means, the thermally responsive valve being responsive to temperature generated by the combusting means for controlling the flow of fuel gas to the combusting means for controlling the temperature generated by the combusting means, the thermally responsive valve comprising a valve housing defining a valving chamber, an inlet port to the valving chamber for receiving fuel gas from the fuel supply means, an outlet port from the valving chamber for delivering fuel gas to the combusting means, a valving means for controlling the flow of fuel gas through the valving chamber between the inlet port and the outlet port, wherein the valving means comprises a thermally responsive bi-metal valving means co-operating with a valve seat located in the valving chamber intermediate the inlet port and the outlet port for controlling the flow of fuel gas through the valving chamber in response to the temperature generated by the combusting means, and wherein the valving means has a predetermined transition temperature at which the valving means transitions from a first configuration to a second configuration, the second configuration being a mirror image of the first configuration, and the valving means is supported by a support means at at least two spaced apart locations respectively spaced apart from the centre of the valving means for constraining movement of the valving means for preventing transitioning of the valving means from the first configuration to the second configuration, but permitting limited movement of the valving means to control the flow of fuel gas through the valving chamber in response to the temperature generated by the combusting means.

In another embodiment of the invention the valving means is located within the valving chamber.

In a further embodiment of the invention the valving means is supported by the support means co-operating with the valve seat for constraining the valving means for preventing the valving means transitioning from the first configuration to the second configuration.

The invention also provides a gas powered hand tool comprising a main body member of heat conductive material, and a combusting means for converting fuel gas to heat for heating the main body member, a fuel gas supply means for supplying fuel gas to the combusting means, and a thermally responsive valve for controlling the supply of fuel gas from the fuel gas supply means to the combusting means in response to the temperature of the main body member for controlling the temperature of the main body member, the thermally responsive valve comprising a valve housing defining a valving chamber, an inlet port to the valving chamber for receiving fuel gas from the fuel supply means, an outlet port from the valving chamber for delivering fuel gas to the combusting means, a valving means for controlling the flow of fuel gas through the valving chamber between the inlet port and the outlet port, wherein the valving means comprises a thermally responsive bi-metal valving means co-operating with a valve seat located in the valving chamber intermediate the inlet port and the outlet port for controlling the flow of fuel gas through the valving chamber in response to the temperature of the main body member, and wherein the valving means has a predetermined transition temperature at which the valving means transitions from a first configuration to a second configuration, the second configuration being a mirror image of the first configuration and the valving means is supported by a support means at at least two spaced apart locations respectively spaced apart from the centre of the valving means for constraining movement of the valving means for preventing transitioning of the valving means from the first configuration to the second configuration, but permitting limited movement of the valving means to control the flow of fuel gas through the valving chamber in response to the temperature generated by the combusting means.

In another embodiment of the invention the valving means is located within the valving chamber.

In a further embodiment of the invention the valving means is supported by the support means co-operating with the valve seat for constraining the valving means for preventing the valving means transitioning from the first configuration to the second configuration.

Preferably, the valving means comprises a bi-metal valving disc. Advantageously, the valving disc is of circular shape, and preferably, the valving disc is non-perforated.

In another embodiment of the invention a valving element is co-operable with the valve seat, and the valving means is co-operable with the valving element for controlling the flow of fuel gas through the valving chamber in response to temperature.

Preferably, the valving element co-operates with the valving means adjacent the centre thereof.

Advantageously, the valve seat is defined by one of the inlet and outlet ports.

In one embodiment of the invention the inlet port defines the valve seat.

In another embodiment of the invention the inlet port extends into the valving chamber and the outlet port extends from the valving chamber on the same side of the valving means.

In a further embodiment of the invention the outlet port extends from the valving chamber on the opposite side of the valving means to that on which the inlet port extends into the valving chamber.

In one embodiment of the invention the valve housing is of heat conductive material and is secured to the main body member with heat conducting engagement.

In another embodiment of the invention the gas powered hand tool is a glue gun, and the main body member defines a melt chamber for melting hot melt glue therein.

In another embodiment of the invention the gas powered hand tool is a soldering iron, and the main body member defines a soldering tip of the soldering iron.

Further the invention provides a method for controlling fluid flow through a valve chamber of a valve, the method comprising providing a thermally responsive bi-metal valving means for controlling fluid flow through the valving chamber in response to temperature, the valving means having a predetermined transition temperature at which the valving means transitions from a first configuration to a second configuration, the second configuration being substantially a mirror image of the first configuration, wherein the valving means is constrained to prevent the valving means transitioning from the first configuration to the second configuration, but limited movement of the valving means is permitted for controlling fluid flow through the valving chamber in response to temperature.

The advantages of the invention are many. The thermally responsive valve according to the invention facilitates relatively accurate and sensitive control of temperature of a component of a gas powered appliance. In particular, the accuracy and sensitivity of the thermally responsive valve according to the invention in general, permits the temperature of the appliance to be maintained at a desired predetermined temperature within a relatively narrow predetermined temperature range, typically, within plus or minus a few degrees C of the desired predetermined temperature, and in many cases, within ±1°C of the desired predetermined temperature. In fact, it has been found that when the thermally responsive valve is used in conjunction with a hand held glue gun, which comprises a body member within which stick glue is to be melted at a temperature of approximately 200°C, and in which the body member is heated by a gas catalytic converter located within a combustion chamber in the body member, the temperature of the body member can be controlled at the desired temperature of 200°C ± 2°C during steady state working conditions of the glue gun. Indeed, it has been found that the temperature of the body member can be controlled substantially without any hystersis, which would otherwise be associated with valves in which the valving disc is free to transition from its first configuration to its second configuration. A further advantage of the thermally responsive valve according to the invention is that the valve can be provided in a relatively small, neat and compact size, and of a particularly convenient configuration for use with a hand held appliance. Although, needless to say, it will be readily apparent to those skilled in the art that the valve may be used with any gas powered appliance, hand held or otherwise. A further advantage of the invention is that it permits us of a bi-metal valving disc of relatively broad dimensional tolerances, and in particular, the valve accommodates relatively broad tolerances of the depth of concavity of the valving disc.

A further advantage of the invention is that by virtue of the fact that the valving disc is constrained for preventing transitioning between its respective first and second configurations at the respective transition temperatures, the life of the valving disc is significantly increased over and above the life which would be expected from such a valving disc if it were operating in an unconstrained fashion for operating a valve in digital on/off manner. This is because metal fatigue to which a valving disc which continuously transitions between its first and second configurations is subjected is reduced when the valving disc is constrained to prevent transitioning between its respective first and second configurations.

A further advantage of the invention is achieved when the valving means or the valving element is located for co-operating with the inlet port for modulating the flow of fuel gas through the valving chamber of the valve. In this way, there is little or no danger of the valving element sticking against the valve seat, since the pressure of fuel gas in the inlet port is sufficient for lifting the valving element off the valve seat.

The invention will be more clearly understood from the following description of some preferred embodiments thereof, which are given by way of example only, with reference to the accompanying drawings in which:
Fig. 1 is a perspective view of a thermally responsive valve according to the invention,
Fig. 2 is a transverse cross-sectional side elevational view of the valve of Fig. 1,
Fig. 3 is a view similar to that of Fig. 2 of the valve of Fig. 1 illustrating a portion of the valve in a different position,
Fig. 4 is a perspective view of a portion of the valve of Fig. 1,
Fig. 5 is a perspective view of another portion of the valve of Fig. 1,
Fig. 6 is a perspective view of a further portion of the valve of Fig. 1,
Fig. 7 is a view similar to that of Fig. 2 of a thermally responsive valve according to another embodiment of the invention,
Fig. 8 is a perspective view of a portion of a glue gun according to the invention, incorporating a thermally responsive valve according to another embodiment of the invention,
Fig. 9 is a cutaway perspective view of the glue gun of Fig. 8,
Fig. 10 is a perspective view of the thermally responsive valve of the glue gun of Fig. 8,
Fig. 11 is a cutaway perspective view of the thermally responsive valve of the glue gun of Fig. 8,
Fig. 12 is a perspective view of a glue gun according to another embodiment of the invention incorporating a thermally responsive valve, according to another embodiment of the invention,
Fig. 13 is a cutaway perspective view of the glue gun of Fig. 12,
Fig. 14 is a perspective view of the glue gun of Fig. 12 from a different direction to that of Fig. 12,
Fig. 15 is a perspective view of a detail of the glue gun of Fig. 12,
Fig. 16 is a transverse cross-sectional side elevational view of a thermally responsive valve according to a still further embodiment of the invention, and
Figs. 17 (a), (b) and (c) illustrate graphs of temperature plotted against time of gas powered glue guns according to the embodiment of the invention of Figs. 8 to 11.

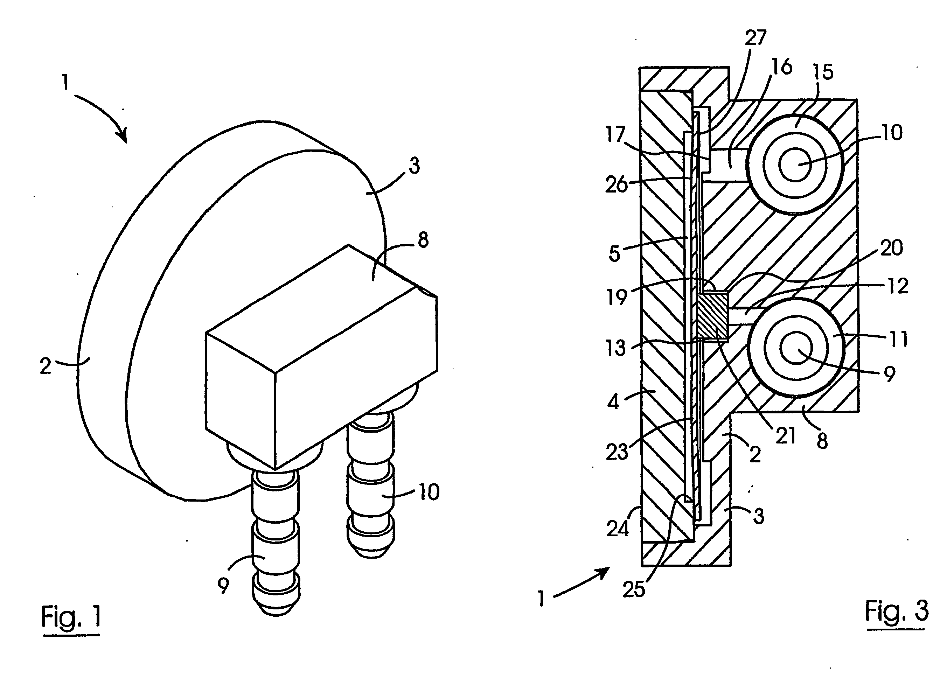

Referring to the drawings and initially to Figs. 1 to 6, there is illustrated a thermally responsive valve according to the invention, indicated generally by the reference numeral 1. The valve 1 is particularly suitable for controlling the flow of fuel gas to a hand-held gas powered appliance, for example, a glue gun, a soldering iron, a hair curling tongs or the like in response to the temperature of the appliance for in turn, controlling the operating temperature of the appliance, and in particular for maintaining the operating temperature of the appliance substantially constant within upper and lower predetermined limits. The valve 1 comprises a valve housing 2 which is formed by a female part 3 and a male part 4 which engages the female part 3 for defining with the female part 3 a valving chamber 5 of circular shape. Both the female and male parts 3 and 4 are of a heat conductive material, and typically, the male part 4 would be attached with heat conducting engagement to the component of the appliance, the temperature of which is to be controlled. A boss 8 extending from the female part 3 accommodates an inlet 9 through which fuel gas is fed into the valving chamber 5, and an outlet 10 from which fuel gas is fed from the valving chamber 5. An intermediate bore 11 drilled through the boss 8 from the inlet 9 communicates with an inlet bore 12 drilled into the female part 3 and the boss 8 from the valving chamber 5. The inlet bore 12 terminates in an inlet port 13 through which fuel gas is delivered into the valving chamber 5 from the inlet 9. An intermediate bore 15 and an outlet bore 16, which are similar to the intermediate bore 11 and the inlet bore 12, respectively, are drilled into the boss 8, and the female part 3, and the outlet bore 16 terminates in the valving chamber 5 in an outlet port 17, which communicates with the outlet 10 through the intermediate and outlet bores, 15 and 16, respectively.

A counter bore 19 drilled into the inlet bore 12 forms a seat 20 with which a valving means, portion of which is formed by a valving element 21, co-operates for controlling flow of fuel gas into the valving chamber 5 from the inlet port 13. The valving means also comprises a valving member, which in this embodiment of the invention is provided by a thermally responsive concave snap action bi-metal valving disc 23 of circular shape which is located within the valving chamber 5 for co-operating with the valving element 21 for urging the valving element 21 relative to the valve seat 20 for controlling the flow of fuel gas into the valving chamber 5 in response to the temperature of the valving disc 23.

The valving disc 23 has an upper transition temperature and a lower transition temperature. The upper transition temperature of the valving disc 23 is the temperature at which the valving disc 23, if it were unconstrained would transition with a snap action from a first configuration to a second configuration as the temperature of the valving disc 23 is rising. In the first configuration the valving disc 23 is concave when viewed from one direction, and in the second configuration the valving disc 23 is concave when viewed from the opposite direction. In other words, the second configuration of the valving disc 23 is a mirror image of the first configuration. The lower transition temperature is the temperature at which the valving disc 23 if unconstrained would transition with a snap action from the second configuration to the first configuration as the temperature of the valving disc 23 is falling. The upper transition temperature is a higher temperature than the lower transition temperature.

In accordance with the invention, the valving disc 23 is constrained within the valving chamber 5 as will be described below so that the valving disc 23 is prevented from transitioning from its first configuration to its second configuration. This, as will be described below, prevents the valving disc 23 operating with its normal digital type on/off action as it snaps from its first configuration to its second configuration, and vice versa. But rather, by constraining the valving disc 23 in the valving chamber 5 to prevent transitioning of the valving disc 23 between its first and second configurations, the valving disc 23 acts in an analogue fashion for modulating the flow of fuel gas through the valving chamber 5 in response to the temperature of the valving disc 23. Thus, by modulating the flow of fuel gas to the appliance the temperature of the appliance can be maintained substantially constant within upper and lower predetermined limits.

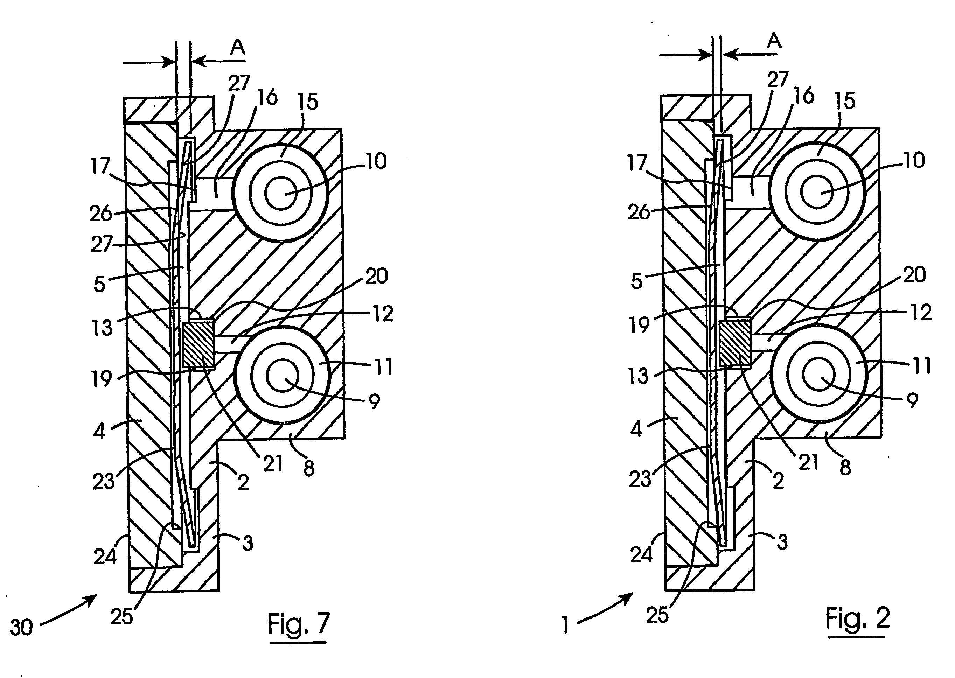

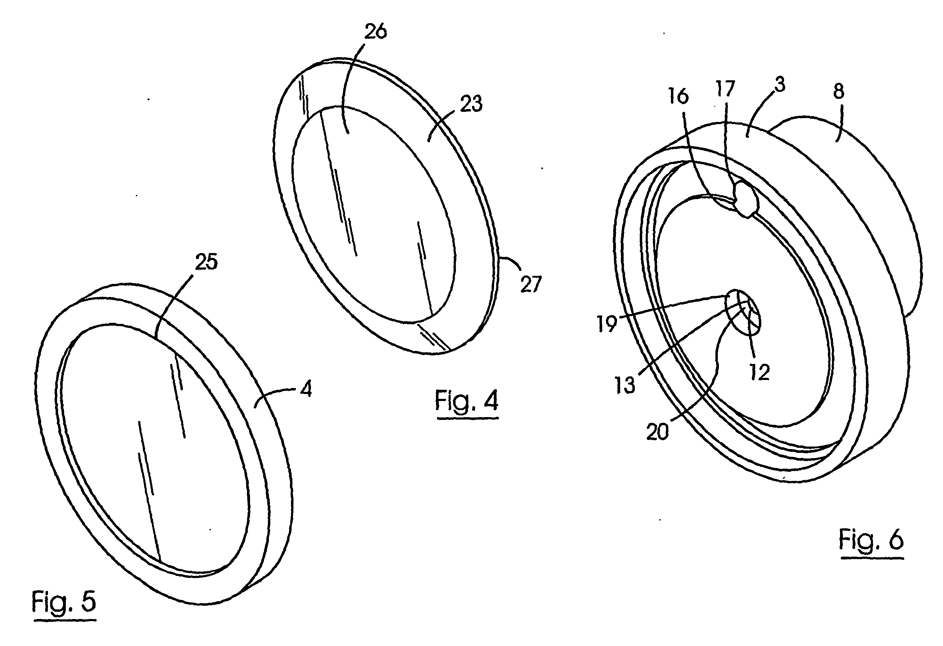

The upper and lower transition temperatures of the valving disc 23 are determined by the materials of the two metals of the bi-metal of the valving disc 23, and also by the depth A (see Fig. 2) of concavity of the valving disc 23 at room temperature. The valving disc 23 is chosen to have upper and lower transition temperatures such that the operating temperature of the valving disc which corresponds to the operating temperature about which the temperature of the appliance is to be maintained constant lies between the upper and lower transition temperatures, and preferably, lies approximately halfway between the upper and lower transition temperatures. Accordingly, for example, where it is desired to maintain the temperature of a component of an appliance substantially constant at a predetermined temperature within upper and lower predetermined limits, allowing for a temperature drop between the component and the valving disc 23, the valving disc 23 is selected to have upper and lower transition temperatures such that the midpoint temperature between the respective upper and lower transition temperatures is less than the temperature at which the component is to be maintained by an amount corresponding to the temperature drop between the component and the valving disc 23. In this embodiment of the Invention it is desired to maintain the temperature of the component the temperature of which is being controlled at a temperature of approximately 200°C. Accordingly, allowing for a 3°C temperature drop between the component and the valving disc 23, the valving disc 23 is selected to have an upper transition temperature of approximately 202°C, and a lower transition temperature of approximately 192°C. Thus, the midpoint temperature between the upper and lower transition temperatures is approximately 197°C, in other words, halfway between the respective upper and lower transition temperatures, and 3°C less than the temperature at which the component is to be maintained constant. Thus, the valving disc 23 operates within the valving chamber 5 for modulating the flow of fuel gas through the valving chamber 5 for maintaining the temperature of the valving disc 23 around the midpoint temperature of approximately 197°C, which in turn maintains the temperature of the component around the desired temperature of 200°C.

The valving disc 23 is located in the valving chamber 5 to be substantially free floating therein at room temperature, but is constrained within the valving chamber 5 for preventing the valving disc 23 transitioning from its first configuration illustrated in Fig. 2 to its second configuration. A support means is provided by an annular support shoulder 25 extending around the male member 4 of the valve housing 2 within the valving chamber 5 for engaging one major face 26 of the valving member 23 adjacent and around its peripheral edge for supporting the valving disc 23. The valving disc 23 is engaged by the support shoulder 25 as a central portion of the opposite major face 27 of the valving disc 23 commences to engage the valving element 21 as the temperature of the valving disc 23 rises for urging the valving element 21 towards the valve seat 20, for in turn controlling the flow of fuel gas into the valving chamber 5. In general, the valving disc 23 commences to engage the support shoulder 25 and the valving element 21 as the temperature of the valving disc 23 commences to reach the lower transition temperature. However, depending on the depth of concavity A of the valving disc 23 at room temperature, the valving disc 23 may engage the support shoulder 25 and the valving element 21 at lower temperatures as will be discussed below.

The annular support shoulder 25 and the valving element 21, and in turn the valve seat 20 co-operate to constrain the valving disc 23 within the valving chamber 5 for preventing the valving disc 23 transitioning from its first to its second configuration. However, while the valving disc 23 is constrained in the valving chamber 5 for preventing the valving disc 23 transitioning between its first and second configurations, the valving disc 23 is not sufficiently constrained as to prevent transitioning of the valving disc 23 towards a mid configuration between its respective first and second configurations, see Fig. 3. Thus, the valving disc 23 is constrained in the valving chamber 5 to operate with an analogue action as the valving disc 23 is engaged by and between the support shoulder 25 and the valving element 21, for in turn controlling the flow of fuel gas through the valving chamber 5 in response to the temperature of the valving disc 23. The flow of fuel gas is controlled by the valving disc 23 so that the flow of fuel gas through the valving chamber 5 is inversely proportional to the temperature of the valving disc 23.

It has been found that by so constraining the valving disc 23 within the valving chamber 5, the valve 1 is provided with a relatively high accuracy and sensitivity, particularly at temperatures of the valving disc 23 between the respective upper and lower transition temperatures of the valving disc 23. Additionally, it has been found that the incremental deflection of the centre portion of the valving disc 23 relative to its outer periphery for each unit change in temperature is significant as the temperature of the valving disc 23 fluctuates within the upper and lower transition temperatures. The amount of deflection of the centre portion of the valving disc 23 relative to its outer periphery is the change in the depth A of concavity of the valving disc 23, see Figs. 2 and 3. Accordingly, the deflection of the valving disc 23 at temperatures within the upper and lower transition temperatures permits relatively accurate modulation of the flow of fuel gas in response to temperature change of the valving disc 23 within the upper and lower transition temperatures. Furthermore, because the valving disc 23 is constrained in the valving chamber 5 to prevent it transitioning from its first to its second configuration, the valving disc 23 continues to modulate the flow of fuel gas through the valving chamber 5 without any danger of the valving disc 23 acting with a digital type on/off action, which would otherwise occur if the valving disc 23 were not so constrained in the valving chamber 5. Indeed, even where the temperature of the valving disc 23 exceeds its upper transition temperature, due to it being constrained in the valving chamber 5, the valving disc 23 continues to modulate the flow of fuel gas through the valving chamber 5 at temperatures above the upper transition temperature until the valving element 23 is urged sufficiently tightly into the valve seat 20 for closing the inlet port 13.

Additionally, by selecting the valving disc 23 so that the temperature of the valving disc 23 about which the flow of fuel gas is to be modulated lies within the upper and lower transition temperatures of the valving disc 23 relatively broad tolerances in the manufacture of the valving disc 23 can be accommodated. A reasonably broad tolerance in the depth A of concavity of the valving disc 23 can be accommodated once the valving disc 23 is manufactured to have upper and lower transition temperatures such that the temperature of the valving disc 23 which correspond to that of the component of the appliance about which the temperature is to be controlled lies within the upper and lower transition temperatures of the valving disc, and preferably, halfway between the upper and lower transition temperatures of the valving disc. For example, the depth A of concavity of the valving disc may be relatively shallow at room temperature, such as the depth A of the valving disc of the valve 1 of Figs. 1 to 6. The valving disc 23 of the valve 1 is illustrated at room temperature in Fig 2. Alternatively, the valving disc may have a relatively deeper depth of concavity A at room temperature as, for example, in the case of the valving disc of the valve of Fig. 7, which is substantially similar to the valve 1, and which will be described below. In the case of both the valves of Figs. 1 to 6 and Fig. 7 the valving discs 23 are manufactured to have upper and lower transition temperatures of 202°C and 192°C, respectively, and thus, both valves accurately modulate the flow of fuel gas through the valving chamber 5 at a valving disc temperature of 197°C ± 2°C.

The valve housing 2 is of a heat conductive material, in this embodiment of the invention brass, and is adapted so that the surface 24 of the male part 4 can be secured with heat conducting engagement to the surface of a component (not shown) of the appliance (not shown), the temperature of which is to be controlled. The valving disc 23 although being free floating within the valving chamber 5 when at room temperature engages part of the valve housing 2, depending on the orientation of the valve 1, so that the temperature of the valving disc 23 is maintained substantially at the temperature of the valve housing 2, and thus, at the temperature of the body member (not shown). However, once the temperature of the valving disc 23 reaches a temperature at which the valving disc 23 begins to engage both the support shoulder 25 and the valving element 21, particularly good heat conduction occurs between the valve housing 2 and the valving disc 23 for thus ensuring that the temperature of the valving disc 23 is relatively close, if not similar to the temperature of the valve housing 2.

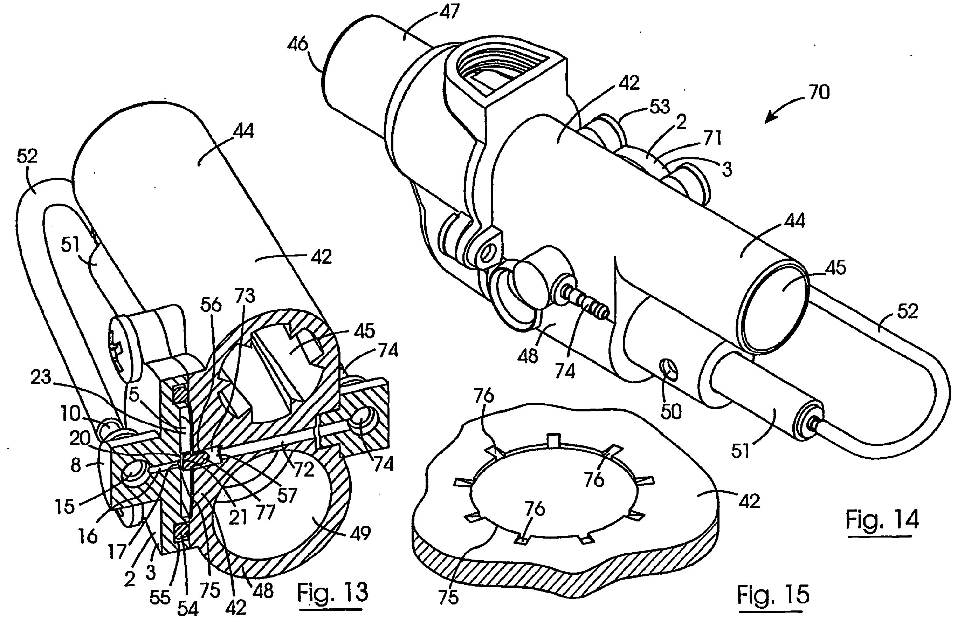

In use, with the male part of the valve 1 secured with heat conducting engagement to a component of an appliance, the temperature of which is to be maintained substantially constant within predetermined upper and lower limits, and with the inlet 9 connected to a fuel supply source, and the outlet 10 connected to a burner of the appliance, or other combusting means, for example, a gas catalytic combustion element or a flame burner for converting fuel gas to heat for heating the body member (not shown), the valve 1 is ready for use. Initially, when the component of the appliance and in turn the valve housing 2 and the valving disc 23 are at room temperature the valving element 21 is disengaged from the valve seat 20, thereby permitting the flow of fuel gas unimpeded through the valving chamber 5 from the inlet 9 to the outlet 10 to the burner for heating the component of the appliance. As the temperature of the component of the appliance commences to rise, and the temperatures of the valve housing 2 and valving disc 23 correspondingly rise, the valving disc 23 commences to deflect from its first configuration towards a substantially mid configuration between its first and second configurations, see Fig. 3. Until the temperature of the valving disc 23 reaches the lower transition temperature, fuel gas continues to pass through the valving chamber 5 from the inlet 9 to the outlet 10 unimpeded at the normal rate. However, as the temperature of the valving disc 23 exceeds the lower transition temperature, and commences to approach a temperature mid way between the upper and lower transition temperatures of the valving disc 23, the valving disc 23 commences to urge the valving element 21 towards the valve seat 20 for commencing modulation of the flow of fuel gas through the valving chamber 5 from the inlet 9 to the outlet 10. The valving disc 23 operates the valving element 21 for modulating the flow of fuel gas through the valving chamber 5 between the inlet 9 and the outlet 10 In inverse proportion to the temperature of the valving disc 23 within a relatively narrow temperature range about the mid point temperature between the upper and lower transition temperatures. The mid point temperature in this embodiment of the invention is approximately 197°C. Indeed, it has been found that the valve 1 modulates the flow of fuel gas to the burner of the appliance for maintaining the temperature of the component of the appliance when operating in a steady state condition at a temperature of approximately 200° ± 1°C. This is described below with reference to the graphs of Fig. 13.

Referring now to Fig. 7 there is illustrated a thermally responsive valve also according to the invention indicated generally by the reference numeral 30 which is virtually identical to the valve 1 of Figs. 1 to 6. For convenience similar components are identified by the same reference numerals. The only difference between the valve 30 of Fig. 7 and the valve 1 of Figs. 1 to 6 is in the depth A of concavity of the valving members 23 of the valves 1 and 30 at room temperature. As discussed above, and as can be seen in Fig. 7 the depth of concavity A of the valving disc 23 of the valve 30 at room temperature is deeper than the corresponding depth A of concavity of the valving disc 23 of the valve 1 at room temperature, see Fig. 2.

The reason that relatively large dimensional tolerances in the depth A of concavity of the valving disc 23 can be accommodated, provided of course that the valving disc 23 is manufactured to have the appropriate upper and lower transition temperatures is achieved by virtue of the fact that as discussed above, the valving disc 23 is constrained within the valving chamber 5 to prevent the valving disc transitioning between its respective first and second configurations. In this way the valving disc is utilised for modulating the flow of fuel gas while its temperature lies within the respective upper and lower transition temperatures of the valving disc, since at these temperatures the amount of deflection of the centre of the disc relative to its periphery for each unit change in temperature is significantly greater than the corresponding deflection when the temperature of the valving disc is below the lower transition temperature. Irrespective of the depth A of concavity, each valving disc will tend to approach its relatively straightened mid configuration at the mid point temperature between the upper and lower transition temperatures of the valving disc, therefore, once the tolerance of the distance between the respective planes which contain the support shoulder 25 and the valve seat 20, and the length of the valving element 21 extending between the valving disc 23 and the valve seat 21 is maintained relatively tight the valving disc 23 will accurately modulate the flow of fuel gas about a temperature corresponding to the mid point temperature between the upper and lower transition temperatures of the valving disc. Thus, a relatively broad tolerance in the depth A of concavity of the valving discs can be accommodated.

It will of course be appreciated that while the valves 1 and 30 described with reference to Figs. 1 to 7 have been described for modulating the flow of fuel gas through the valve when the temperature of the valving member is around 197°C for in turn maintaining the temperature of a component of an appliance to which the valve is in heat conductive engagement at a temperature of approximately 200°C, it will be readily apparent to those skilled in the art that by appropriately selecting the valving disc to have upper and lower transition temperatures appropriate to the temperature at which the temperature of the component of the appliance is to be maintained constant, the valves can be produced for controlling the temperature of an appliance about any desired temperature.

Additionally, the valves according to the Invention may be used for controlling the flow of other fluids besides fuel gas, and may also be provided for controlling liquid flow in response to temperature.

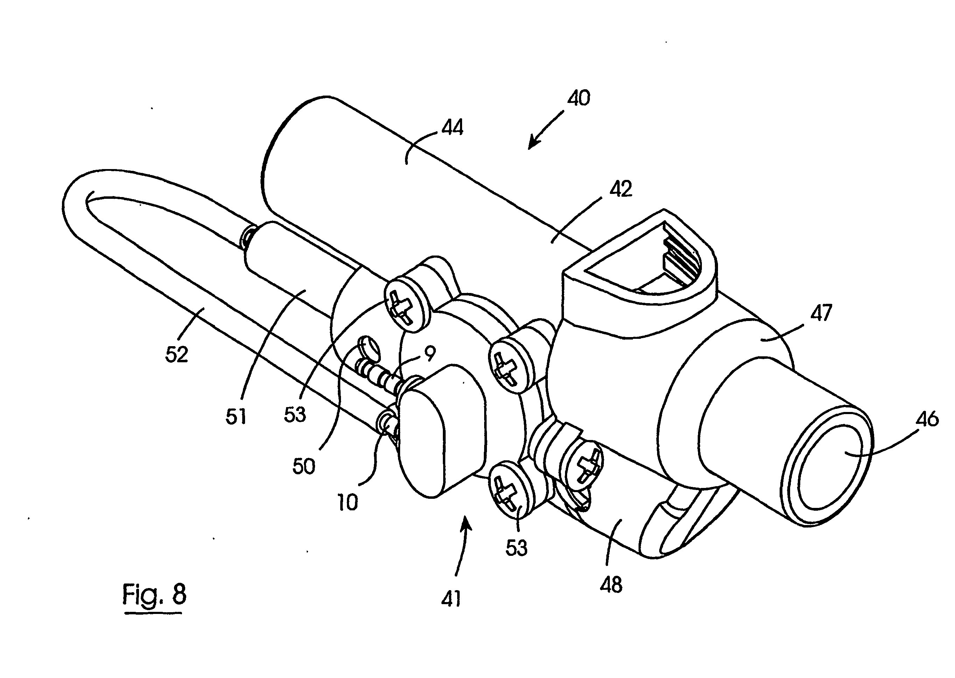

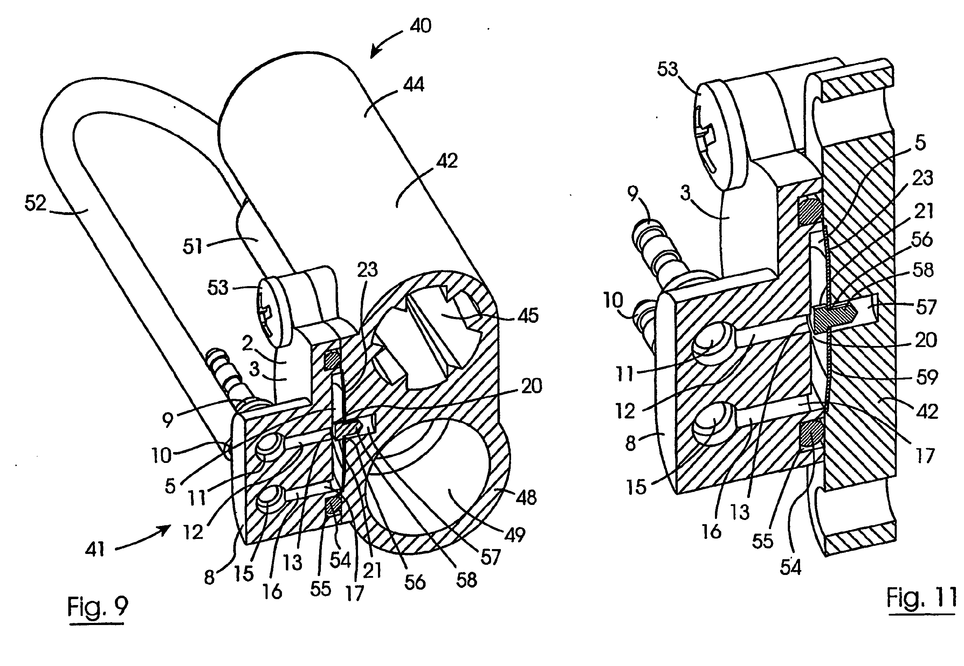

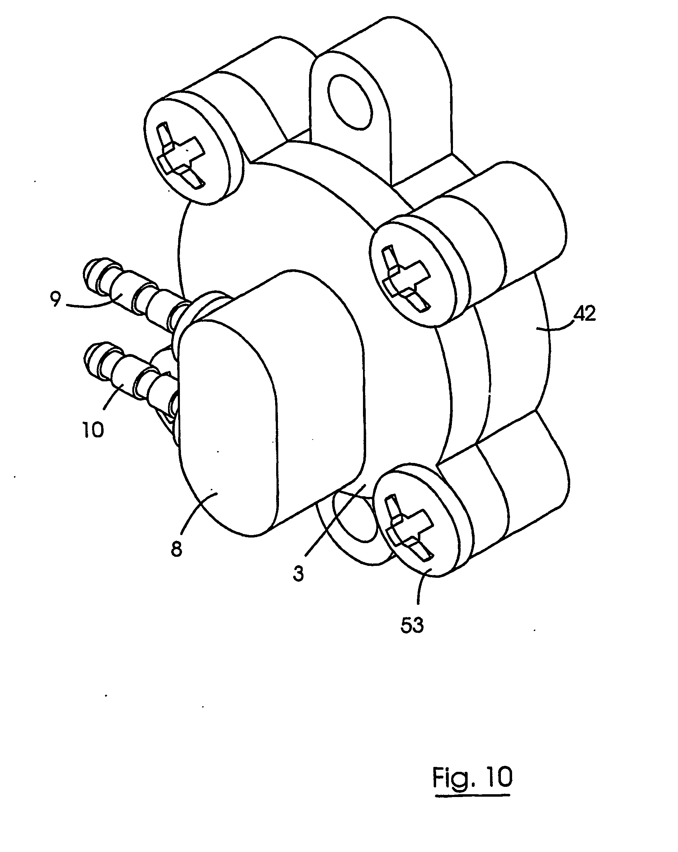

Referring now to Figs. 8 to 11, there is illustrated a portion of a glue gun also according to the invention which is indicated generally by the reference numeral 40 which incorporates a thermally responsive valve which is indicated generally by the reference number 41 and is also according to the invention. The valve 41 is substantially similar to the valve 1 and similar components are identified by the same reference numerals. However, before describing the valve 41, the relevant parts of the glue gun 40 will first be described. The glue gun 40 comprises a main body member 42 having an upstream portion 44 which defines an elongated glue stick accommodating bore 45 for accommodating a glue stick. An urging mechanism and a trigger mechanism, neither of which are illustrated, are secured to the main body member 42 for urging the glue stick into the glue accommodating bore 45 for melting thereof. An outlet nozzle 46 extends from a downstream end 47 of the main body member 42. The outlet nozzle 46 communicates with the glue accommodating bore 45 for dispensing melted glue from the glue gun 40. A lower portion 48 of the main body member 42 extending between the upstream portion 44 and the downstream end 47 forms a combustion chamber 49. A catalytic combustion element (not shown) is located within the combustion chamber 49, and a mixture of fuel gas and air is supplied to the catalytic combustion element from a venturi mixer (not shown) within which air is mixed with fuel gas. The venturi mixer is located in the lower portion 48 of the main body member at 50, upstream of the combustion chamber 49. The fuel gas is supplied to the venturi mixer through a jet (not shown) in a jet housing 51 through a communicating pipe 52 from the outlet 10 of the valve 41. The inlet 9 of the valve 41 is connected to a fuel gas source, typically, a fuel gas reservoir which may be formed in a handle (not shown) of the glue gun 40 extending from the main body member 42. Typically, the fuel gas is stored In liquid form in the fuel gas reservoir.

Turning now to the valve 41, as mentioned above the valve 41 is similar to the valve 1, and similar components are identified by the same reference numerals. The main difference between the valve 41 and the valve 1 is that the male part of the valve housing 2 has been omitted, however, the valving chamber 5 in this embodiment of the invention is closed by the main body member 42 of the glue gun 40, and the female part 3 of the valve housing 2 is secured to the main body member 42 by screw 53. Thus the main body member 42 forms a part which is equivalent to the male part of the valve 1. An O-ring seal 54 extending within a groove 55 in the female part 3 seals the valving chamber 5.

In this embodiment of the Invention, instead of the valving element 21 being free floating within a counter bore, the valving element 21 is secured in a central bore 56 through the valving disc 23. A counter bore 57 is drilled into the main body member 42 for accommodating a rearward extension 58 of the valving element 21. The valving disc 23 is free floating in the valving chamber 5 at room temperature, and the body member 42 is dish shaped at 59 for accommodating the curvature of the valving disc 23. In this embodiment of the invention, instead of being engaged and supported in the valving chamber 5 by a support shoulder, the valving disc 23 is engaged and supported in the valving chamber 5 around its periphery by the peripheral portion of the dish shaped portion 59 of the main body member 42 as the temperature of the main body member 42, and in turn that of the valving disc 23 increases. Accordingly, as the temperature of the valving disc 23 increases, the depth of concavity A of the valving disc 23 decreases, and thus the action of the peripheral edge of the disc shaped portion 59 of the main body member 42 on the valving disc 23 causes the valving disc 23 to urge the valving element 21 towards and into engagement with the valve seat 20.

Otherwise, operation of the valve 41 for maintaining the temperature of the body member 42 substantially constant is similar to the operation of the valve 1 which has already been described.

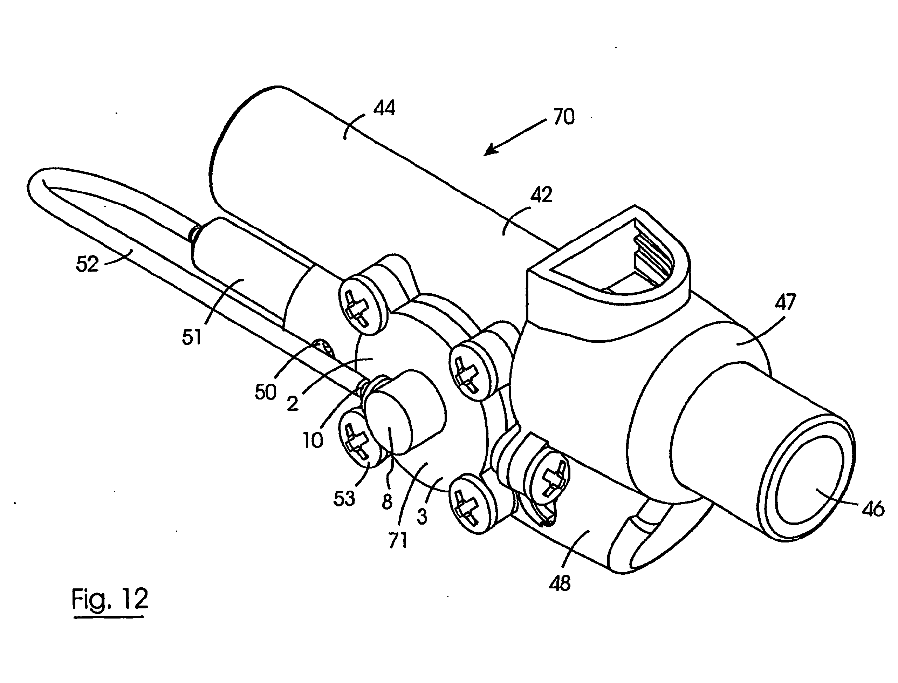

Referring now to Figs. 12 to 15, there is illustrated a glue gun according to another embodiment of the invention which is indicated generally by the reference numeral 70. The glue gun 70 is substantially similar to the glue gun 40, and similar components are identified by the same reference numerals. The glue gun 70 incorporates a thermally responsive valve 71 according to the invention which is also substantially similar to the valve 41 and the valve 1, and similar components are identified by the same reference numerals. The main difference between the glue gun 70 and the glue gun 40 mainly relates to the valve 71. In this embodiment of the invention fuel gas enters the valving chamber 5 through an inlet bore 72 and an inlet port 73 on one side of the valving disc 23, and exits through the outlet port 17 on the opposite side of the valving disc 23. An inlet 74 is located on one side of the main body member 42 of the glue gun 70, and communicates with the inlet port 73 through the inlet bore 72 which extends through the main body member 42 between the glue accommodating bore 45 and the combustion chamber 49. However, in this embodiment of the invention the valve seat 20 is defined by the outlet port 17 and the valving element 21 co-operates with the valve seat 20 for modulating the flow of fuel gas through the valving chamber 5.

A support shoulder 75 formed on the main body member 42 in the valving chamber 5 is similar to the support shoulder 25 of the valve 1, and supports the valving disc 23 In the valving chamber 5 in similar fashion as the valving disc 23 is supported by the support shoulder 25 in the valving chamber 5 of the valve 1. A plurality of radially extending grooves 76 formed in the support shoulder 75 accommodate fuel gas from the inlet port 73 on the one side of the valving disc 23 to the outlet port 17 on the other side of the valving disc 23. A counter bore 77 which is similar to the counter bore 57 of the valve 41 extends into the inlet bore 72 for accommodating an extension portion 58 of the valving element 21. The relative diameters, of the extension portion 58 and the inlet bore 72 is such as to permit the free flow of fuel gas past the extension portion into the valving chamber 5.

Otherwise, the valve 71 and its operation is similar to the valve 41 and the valve 1. However, a particularly important feature of the valve 71 is that the fuel gas passes through the main body member 42 in the inlet bore 72 prior to entering the valving chamber 5. One of the advantages of this is that it allows for heating of the fuel gas prior to the fuel gas entering the valving chamber 5, which facilitates in maintaining the temperature of the valving disc 23 at a temperature substantially similar to that of the main body member 42 of the glue gun 71.

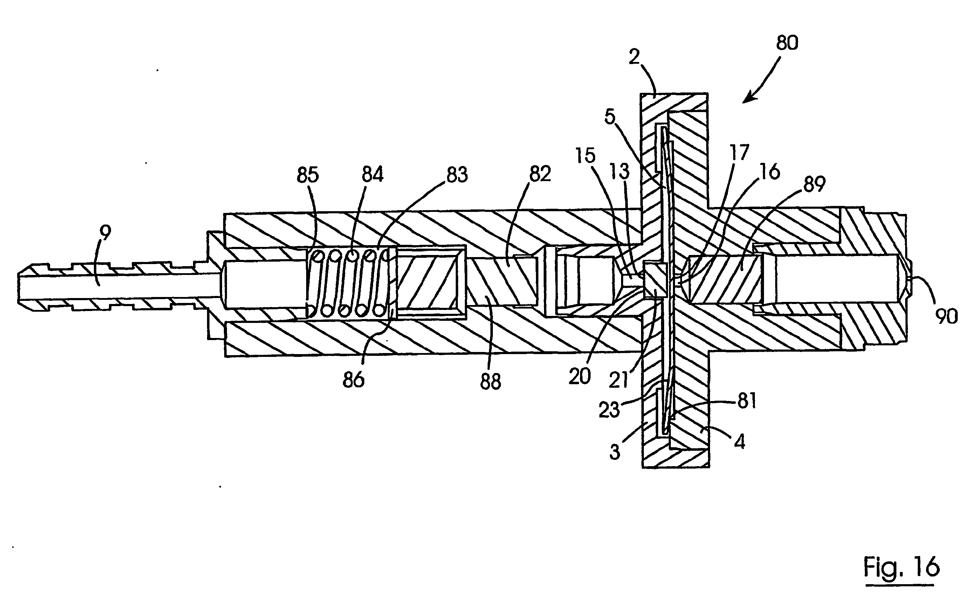

Referring now to Fig. 16, there is illustrated a thermally responsive valve 80 according to another embodiment of the invention which is also suitable for controlling the flow of fuel gas in response to temperature, for example, in response to the temperature of a hand-held gas powered appliance. The valve 80 is substantially similar to the valve 1 and similar components are identified by the same reference numerals. In this embodiment of the invention the valve 80 is of substantially similar construction to that of the valve 71, the inlet port 13 being located on one side of the valving disc 23, and the outlet port 17 being located on the other side of the valving disc 23. However, in this embodiment of the Invention the valving element 21 co-operates with the inlet port 13 for modulating the flow of fuel gas through the valving chamber 5, rather than with the outlet port as is the case in the valve 71. The valving disc 23 is supported on a support shoulder 81 which is of substantially similar construction to the support shoulder 75 of the valve 71 having a plurality of radially extending grooves (not shown) similar to the grooves 76 of the valve 71 extending through the support shoulder 81 for accommodating the flow of fuel gas from one side of the valving disc 23 to the other side.

However, In this embodiment of the invention a safety cut-out mechanism is located upstream of the inlet bore 12 between the inlet bore 12 and the Inlet 9. The safety cut-out mechanism comprises a slug 82 of plastics material impregnated with fibre glass material, which is located within a bore 83 communicating the inlet 9 with the inlet bore 12. A compression spring 84 acting between a shoulder 85 in the bore 83 and a perforated washer 86 applies pressure through the washer 86 to the slug 82. The plastics material of the slug 82 is such that when the temperature of the slug 82 exceeds a predetermined safe operating temperature of the appliance, the material of the slug 82 melts, and under the action of the spring 84 and the washer 86 the melting material of the slug 82 and glass fibres are urged into the pores of a downstream sintered bronze filter 88 also in the bore 83, thereby blocking the filter 88 entirely and preventing the flow of fuel gas from the inlet 9 to the inlet bore 12.

An additional advantage of providing the sintered bronze filter 88 is that once the filter 88 is hot, should the fuel gas reach the filter 88 in liquid form, the fuel gas is rapidly evaporated to gas through the filter 88, so that only fuel gas in gaseous form enters the valving chamber 5 through the inlet bore 12 at substantially the same temperature as that of the body member.

An outlet filter 89 is located downstream of the outlet bore 17 and filters fuel gas from the outlet port 17 to a downstream jet 90. The jet 90, typically, would deliver fuel gas into a venturi mixer for mixing with air prior to combustion.

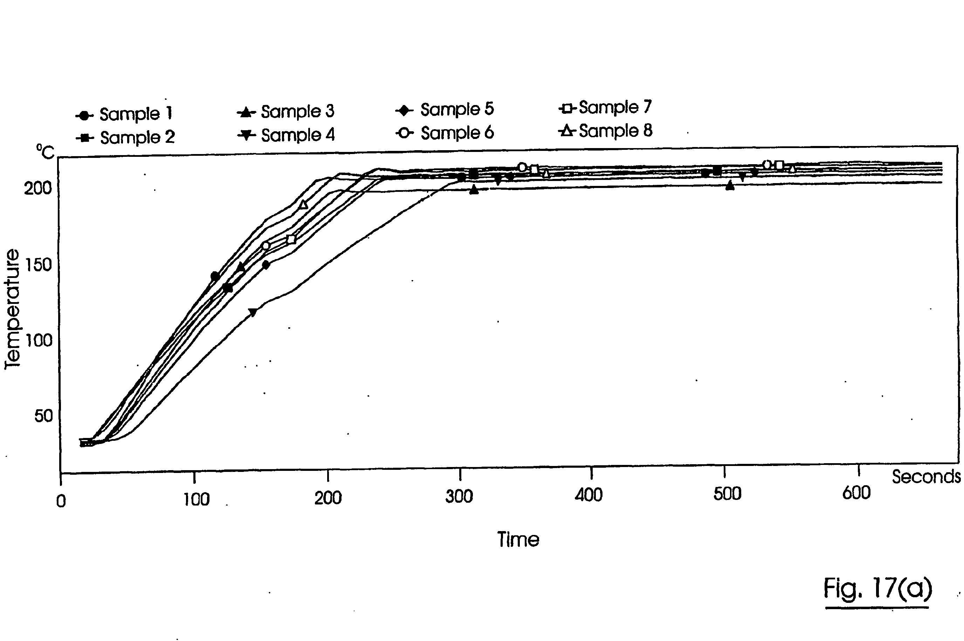

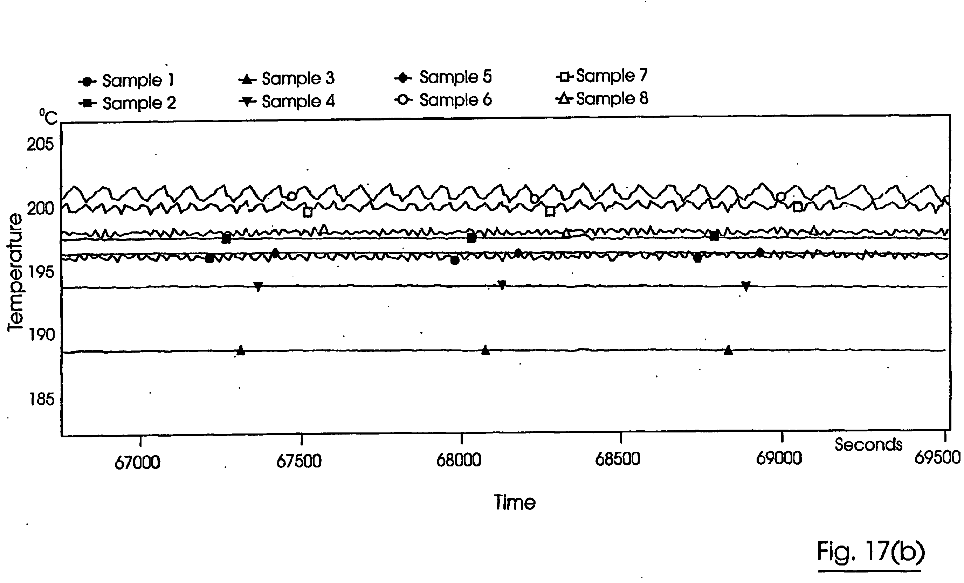

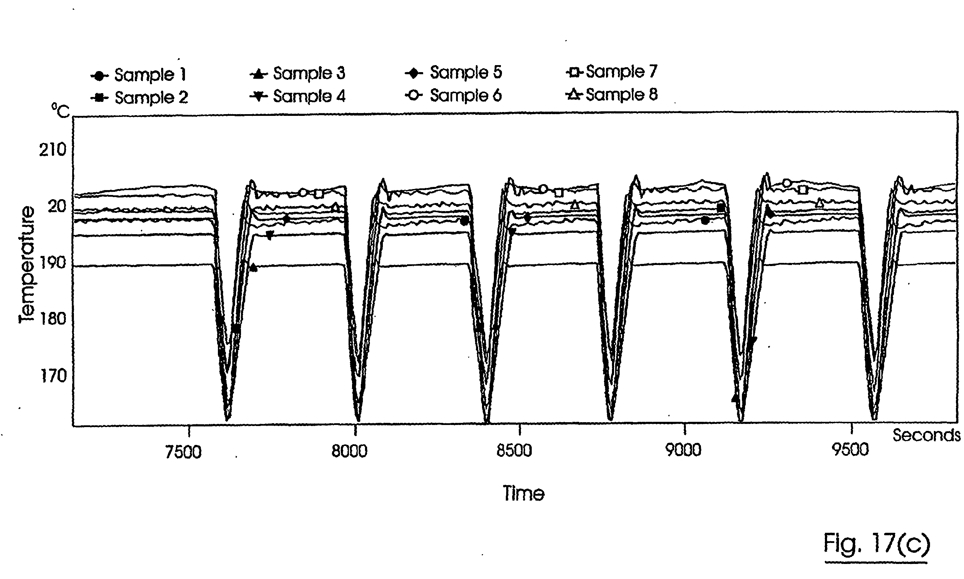

Referring now to Figs. 17 (a) to (c), eight glue guns 40 according to the embodiment of the invention described with reference to Figs. 8 to 11 were constructed and put under test. The graphs of the three Figs. 17 (a) to 17 (c) show plots of temperature against time of the main body member of the respective glue guns. Fig, 17 (a) illustrates a plot of temperature against time of the main body members of each of the eight glue guns as the glue guns are commencing to heat, and after the glue guns have reached steady state operating conditions. The graph of Fig. 17 (b) illustrates the temperature of the main body members of the glue guns operating under steady state conditions. As can be seen, the glue guns are operating at different temperatures within a range of 188°C to approximately 202°C, the upper and lower transition temperatures of the valving discs of the respective glue guns being appropriately chosen. As can be seen in all cases, the valving discs modulate the flow of fuel gas through the valving chambers of the respective glue guns for maintaining the temperature of the main body members of the glue guns about the relevant desired temperature plus or minus approximately 1°C and less. The graphs of Fig. 17 (c) illustrate the temperature of the main body members of each of the eight glue guns operating under load conditions, and as can be seen, each time the temperature of the main body member recovers, the valves modulate the flow of fuel gas to the combustion chamber of the glue guns for maintaining the temperature of the main body members of the glue guns about the relevant desired temperature plus or minus approximately 1°C.

While the thermally responsive valves according to the invention have been described whereby the bi-metal valving disc, the valve housing and the body member or other part of the appliance, the temperature of which is being controlled, are maintained at substantially the same temperature, it will be readily apparent to those skilled in the art that a relatively large temperature drop between the bi-metal valving disc and the body member or other part of the appliance, the temperature of which is being controlled, could be accommodated by appropriately selecting the valving disc to have appropriate upper and lower transition temperatures to accommodate the temperature drop between the bi-metal valving disc and the body member or part of the appliance, the temperature of which is being controlled.

Further, it is envisaged that an adjusting means may be provided for adjusting the predetermined temperature range within which the valves operate, and it is envisaged that the adjusting means could be provided by a mechanism which would facilitate urging the support shoulder formed in the male part of the valve housing of the valve of Figs. 1 to 6 into and out of the valving chamber. It is envisaged that the temperature about which the valving disc would modulate the flow of fluid would be lowered by urging the male part and in turn the support shoulder into the valving chamber.

While the valving discs have been described as being of circular shape, it is envisaged that the bi-metal valving disc may be of any suitable shape, and in certain cases, it is envisaged that the valving means may be provided by an elongated bi-metal strip which would be constrained in two ways In the valving chamber, firstly, it would be constrained to act as a bi-metal disc as already described whereby on reaching its respective transition temperatures it would transition from one configuration to the other, however, a further constraint would be applied to the bi-metal strip which would prevent the bi-metal strip transitioning between the respective first and second configurations at the transition temperatures.

It will also be appreciated that the valving element may be omitted, and in which case, the valving disc or valving strip, as the case may be, would co-operate with the valve seat directly for modulating fluid flow through the valve.

While the valving means has been described as having upper and lower transition temperatures, and furthermore, transitioning when unconstrained between its respective first and second configurations with a snap action, it is envisaged that in certain cases the valving means may be of the type which would transition between its first and second configurations relatively gradually. In which cases, it is envisaged that the valving means would not have upper and lower transition temperatures, but would have a single transition temperature, which would be the temperature at which the valving means passes through its mid configuration between its respective first and second configurations. While such valving means may not be suitable for controlling temperatures as accurately as valving means of the type which transition with a snap action between their respective first and second configurations, because of the greater difficulty in determining the transition temperature, nonetheless, such valving means would be suitable for many applications where the specific temperature at which the flow of fuel gas or other fluid or liquid was to be modulated for controlling temperature or any other parameter was not so critical.

While in general the valves according to the invention have been described as controlling the flow of fuel gas to a gas catalytic converter for converting fuel gas to heat by a catalytic action, it will be readily apparent to those skilled in the art that the valves may be used for controlling the flow of fuel gas to any type of burner, for example, a burner which bums the fuel gas with a flame, or the like.

In general, it is envisaged that a sintered bronze filter will be provided in the inlet port to the valves so that once the sintered bronze filter is heated, the sintered bronze filter will vaporise any fuel gas which may arrive at the inlet port In liquid form. The advantage of this is that only fuel gas in gaseous form will reach the valving disc so that the valving disc will not be subjected to the relative cold temperatures of fuel gas in liquid form, which otherwise, would cause excessive modulation of the fuel gas into the valving chamber, thus leading to excessive swings in the temperature of the body member or other part of the fuel gas appliance, the temperature of which is being controlled. Additionally, the frequency at which the valving disc modulates the flow of fuel gas is also reduced, thereby reducing metal fatigue of the valving disc. It has also been found that the use of the valve provides enhanced proportional control of the supply of fuel gas in response to temperature.

## Claims

1. A thermally responsive valve comprising a valve housing (2) defining a valving chamber (5), a thermally responsive bi-metal valving means (23) for controlling fluid flow through the valving chamber (5) in response to temperature, the valving means (23) having a predetermined transition temperature at which the valving means (23) transitions from a first configuration to a second configuration, the second configuration being substantially a mirror image of the first configuration, **characterised in that** the valving means (23) is supported by a support means (25) at at least two spaced apart locations respectively spaced apart from the centre of the valving means (23) for constraining movement of the valving means (23) in the valving chamber (5) for preventing transitioning of the valving means (23) from the first configuration to the second configuration, but permitting limited movement of the valving means (23) to control fluid flow through the valving chamber (5) in response to temperature.

2. A valve as claimed in Claim 1 **characterised in that** the support means (25) supports the valving means (23) adjacent the periphery thereof.

3. A valve as claimed in Claim 1 or 2 **characterised in that** the support means (25) supports the valving means (23) at spaced apart locations around the periphery thereof for facilitating flow of fluid from one major face of the valving means (23) to an opposite major face thereof.

4. A valve as claimed in any preceding claim **characterised in that** the valving means (23) comprises a bi-metal circular valving disc (23).

5. A valve as claimed in Claim 4 **characterised in that** the valve disc is a non-perforated disc.

6. A valve as claimed in any preceding claim **characterised in that** the valving means (23) is responsive to temperature for controlling the fluid flow through the valving chamber (5) with an analogue controlling action.

7. A valve as claimed in Claim 6 **characterised in that** the valving means (23) is responsive to temperature within a predetermined temperature range adjacent the transition temperature for controlling fluid flow through the valving chamber (5).

8. A valve as claimed in any preceding claim **characterised in that** the valving means (23) is adapted to have a lower transition temperature and an upper transition temperature, the upper transition temperature being the temperature at which the valving means (23) would transition from the first configuration to the second configuration as the temperature is rising if the valving means (23) were unconstrained, and the lower transition temperature being the temperature at which the valving means (23) if unconstrained would transition from the second configuration to the first configuration as the temperature is falling.

9. A valve as claimed in Claim 8 **characterised in that** the valving means (23) is responsive to temperature in a temperature range between the upper transition temperature and the lower transition temperature for controlling fluid flow through the valving.chamber (5).

10. A valve as claimed in any preceding claim **characterised in that** the shape of the valving means (23) is adapted for determining each predetermined transition temperature.

11. A valve as claimed in any preceding claim **characterised in that** the valving means (23) is of the type which would transition from the first to the second configuration with a snap action if unconstrained.

12. A valve as claimed in any preceding claim **characterised in that** the valving means (23) is located in the valving chamber (5).

13. A valve as claimed in any preceding claim **characterised in that** the valve housing (2) is of a heat conductive material, and the valving means (23) is in heat transfer communication with the valve housing (2).

14. A valve as claimed in any preceding claim **characterised in that** an inlet port (13) is provided to the valving chamber (5) for accommodating fluid to the valving chamber (5), and an outlet port (17) is provided from the valving chamber (5) for accommodating fluid from the valving chamber (5), one of the inlet and outlet ports (13, 17) defining a valve seat (20), the valving means (23) co-operating with the valve seat (20) for controlling fluid flow through the valving chamber (5), the support means (25) for supporting the valving means (23) co-operating with the valve seat (20) for constraining the valving means (23) from transitioning from the first to the second configuration.

15. A valve as claimed in Claim 14 **characterised in that** the valving means (23) is co-operable with a valving element (21) which is co-operable with the valve seat (20) for controlling fluid flow through the valving chamber (5).

16. A valve as claimed in Claim 15 **characterised in that** the valving element (21) is co-operable with a central portion of the valving means (23) for controlling the flow of fluid through the valving chamber (5).

17. A valve as claimed in Claim 15 or 16 **characterised in that** the valving means (23) is free floating within the valving chamber (5) at room temperature.

18. A valve as claimed in any of Claims 15 to 17 **characterised in that** the valving element (21) co-operates with the valving means (23) on one major face (27) thereof, and the support means (25) co-operates with the valving means (23) on the opposite major face (26).

19. A valve as claimed in any of Claims 14 to 18 **characterised in that** an adjusting means (25) is provided for adjusting the temperature range within which the valve (1) is operable, the adjusting means (25) comprising a means for urging the valving means (23) towards or away from the valve seat (20).

20. A valve as claimed in Claim 19 **characterised in that** the adjusting means (25) is formed by the support means, and the support means is moveable for moving the valving means (23) towards and away from the valve seat.

21. A gas powered heating appliance comprising a thermally responsive valve (1, 41, 71, 80) for controlling the supply of fuel gas to the appliance (40, 70) in response to temperature, **characterised in that** the thermally responsive valve (1, 41, 71, 80) comprises a thermally responsive valve (1, 41, 71, 80) as claimed in any preceding claim, the thermally responsive valve (1, 41, 71, 80) being responsive to the temperature of the appliance (40, 70).

22. A gas powered hand tool comprising a main body member (42) of heat conductive material, and a combusting means (49) for converting fuel gas to heat for heating the main body member (42), a fuel gas supply means (50, 51) for supplying fuel gas to the combusting means (49), and a thermally responsive valve (1, 41, 71, 80) for controlling the supply of fuel gas from the fuel gas supply means (50, 51) to the combusting means (49) in response to the temperature of the main body member (42) for controlling the temperature of the main body member (42), the thermally responsive valve (1, 41, 71, 80) comprising a valve housing (2) defining a valving chamber (5), an inlet port (13, 73) to the valving chamber (5) for receiving fuel gas from the fuel gas supply means (50, 51), an outlet port from the valving chamber (5) for delivering fuel gas to the combusting means (49), a thermally responsive bi-metal valving means (23) for controlling the flow of fuel gas through the valving chamber (5) between the inlet port (13, 73) and the outlet port (17) in response to temperature, the valving means (23) having a predetermined transition temperature at which the valving means (23) transitions from a first configuration to a second configuration, the second configuration being substantially a mirror image of the first configuration, **characterised in that** the valving means (23) is supported by a support means (25) at at least two spaced apart locations respectively spaced apart from the centre of the valving means (23) for constraining movement of the valving means (23) for preventing transitioning of the valving means (23) from the first configuration to the second configuration, but permitting limited movement of the valving means (23) to control the flow of fuel gas through the valving chamber (5) in response to temperature.

23. A method for controlling fluid flow through a valve chamber (7) of a valve (1, 41, 71, 80), the method comprising providing a thermally responsive bi-metal valving means (23) for controlling fluid flow through the valving chamber (5) in response to temperature, the valving means (23) having a predetermined transition temperature at which the valving means (23) transitions from a first configuration to a second configuration, the second configuration being substantially a mirror image of the first configuration, **characterised in that** the valving means (23) is constrained to prevent the valving means (23) transitioning from the first configuration to the second configuration, but limited movement of the valving means (23) is permitted for controlling fluid flow through the valving chamber (5) in response to temperature.

## Patentansprüche

1. Temperaturabhängiges Ventil, mit einem Ventilgehäuse (2), das eine Ventilkammer (5) festlegt, und einer temperaturabhängigen Bimetall-Ventileinrichtung (23) zum Steuern eines Fluidstroms durch die Ventilkammer (5) in Abhängigkeit von der Temperatur, wobei die Ventileinrichtung (23) eine vorbestimmte Übergangstemperatur hat, bei der die Ventileinrichtung von einer ersten Stellung in eine zweite Stellung übergeht, wobei die zweite Stellung im wesentlichen ein Spiegelbild der ersten Stellung ist, **dadurch gekennzeichnet, daß** die Ventileinrichtung (23) von einer Stützeinrichtung (25) an mindestens zwei voneinander beabstandeten Stellen abgestützt wird, die jeweils von der Mitte der Ventileinrichtung (23) beabstandet sind, um die Bewegung der Ventileinrichtung (23) in der Ventilkammer (5) zu begrenzen und einen Übergang der Ventileinrichtung (23) von der ersten Stellung in die zweite Stellung zu verhindern, gleichzeitig aber eine begrenzte Bewegung der Ventileinrichtung (23) zum Steuern des Fluidstroms durch die Ventilkammer (5) abhängig von der Temperatur zu gestatten.

2. Ventil nach Anspruch 1, **dadurch gekennzeichnet, daß** die Stützeinrichtung (25) die Ventileinrichtung (23) nahe deren Umfang abstützt.

3. Ventil nach Anspruch 1 oder 2, **dadurch gekennzeichnet, daß** die Stützeinrichtung (25) die Ventileinrichtung (23) an voneinander beabstandeten Stellen um deren Umfang herum abstützt, um einen Fluidstrom von einer Hauptfläche der Ventileinrichtung (23) zu einer gegenüberliegenden Hauptfläche derselben zu erleichtern.

4. Ventil nach einem vorhergehenden Anspruch, **dadurch gekennzeichnet, daß** die Ventileinrichtung (23) eine kreisförmige Bimetall-Ventilscheibe (23) umfaßt.

5. Ventil nach Anspruch 4, **dadurch gekennzeichnet, daß** die Ventilscheibe eine nicht gelochte Scheibe ist.

6. Ventil nach einem vorhergehenden Anspruch, **dadurch gekennzeichnet, daß** die Ventileinrichtung (23) zum Steuern des Fluidstroms durch die Ventilkammer (5) mit einem entsprechenden Steuervorgang temperaturabhängig reagiert.

7. Ventil nach Anspruch 6, **dadurch gekennzeichnet, daß** die Ventileinrichtung (23) innerhalb eines vorbestimmten Temperaturbereichs nahe der Übergangstemperatur temperaturabhängig reagiert, um den Fluidstrom durch die Ventilkammer (5) zu steuern.

8. Ventil nach einem vorhergehenden Anspruch, **dadurch gekennzeichnet, daß** die Ventileinrichtung (23) so ausgelegt ist, daß sie eine untere Übergangstemperatur und eine obere Übergangstemperatur aufweist, wobei die obere Übergangstemperatur die Temperatur ist, bei der die Ventileinrichtung (23) bei steigender Temperatur von der ersten Stellung zur zweiten Stellung übergehen würde, wenn die Ventileinrichtung (23) nicht frei wäre, und die untere Übergangstemperatur die Temperatur ist, bei der die freie Ventileinrichtung (23) bei fallender Temperatur von der zweiten Stellung in die erste Stellung übergehen würde.

9. Ventil nach Anspruch 8, **dadurch gekennzeichnet, daß** die Ventileinrichtung (23) temperaturabhängig in einem Temperaturbereich zwischen der oberen Übergangstemperatur und der unteren Übergangstemperatur reagiert, um den Fluidstrom durch die Ventilkammer (5) zu steuern.

10. Ventil nach einem vorhergehenden Anspruch, **dadurch gekennzeichnet, daß** die Form der Ventileinrichtung (23) zum Bestimmen jeder vorbestimmten Übergangstemperatur ausgelegt ist.

11. Ventil nach einem vorhergehenden Anspruch, **dadurch gekennzeichnet, daß** die Ventileinrichtung (23) von der Art ist, die, wenn sie frei wäre, mit einem Schnappvorgang von der ersten Stellung in die zweite Stellung übergehen würde.

12. Ventil nach einem vorhergehenden Anspruch, **dadurch gekennzeichnet, daß** die Ventileinrichtung (23) in der Ventilkammer (5) angeordnet ist.

13. Ventil nach einem vorhergehenden Anspruch, **dadurch gekennzeichnet, daß** das Ventilgehäuse (2) aus einem wärmeleitenden Material besteht und die Ventileinrichtung (23) in Wärmeleitungs-Verbindung mit dem Ventilgehäuse (2) steht.

14. Ventil nach einem vorhergehenden Anspruch, **dadurch gekennzeichnet, daß** eine Einlaßöffnung (13) zur Ventilkammer (5), um der Ventilkammer (5) Fluid zuzuführen, und eine Auslaßöffnung (17) von der Ventilkammer (5), um Fluid von der Ventilkammer (5) aufzunehmen, vorgesehen sind, wobei die Einlaß- oder die Auslaßöffnung (13, 17) einen Ventilsitz (20) festlegt, die Ventileinrichtung (23) mit dem Ventilsitz (20) zur Steuerung des Fluidstroms durch die Ventilkammer (5) zusammenwirkt und die Stützeinrichtung (25) zum Abstützen der Ventileinrichtung (23) mit dem Ventilsitz (20) zusammenwirkt, um die Ventileinrichtung (23) daran zu hindern, von der ersten in die zweite Stellung überzugehen.

15. Ventil nach Anspruch 14, **dadurch gekennzeichnet, daß** die Ventileinrichtung (23) mit einem Ventilelement (21) zusammenwirken kann, das mit dem Ventilsitz (20) zusammenwirken kann, um den Fluidstrom durch die Ventilkammer (5) zu steuern.

16. Ventil nach Anspruch 15, **dadurch gekennzeichnet, daß** das Ventilelement (21) mit einem Mittelabschnitt der Ventileinrichtung (23) zusammenwirken kann, um den Fluidstrom durch die Ventilkammer (5) zu steuern.

17. Ventil nach Anspruch 15 oder 16, **dadurch gekennzeichnet, daß** die Ventileinrichtung (23) bei Raumtemperatur innerhalb der Ventilkammer (5) frei beweglich ist.

18. Ventil nach einem der Ansprüche 15 bis 17, **dadurch gekennzeichnet, daß** das Ventilelement (21) mit der Ventileinrichtung (23) an einer Hauptfläche (27) derselben zusammenwirkt und die Stützeinrichtung (25) mit der Ventileinrichtung (23) an der gegenüberliegenden Hauptfläche (26) zusammenwirkt.

19. Ventil nach einem der Ansprüche 14 bis 18, **dadurch gekennzeichnet, daß** eine Einstelleinrichtung (25) zum Einstellen des Temperaturbereichs, in dem das Ventil (1) betätigbar ist, vorgesehen ist, wobei die Einstelleinrichtung (25) eine Einrichtung zum Drücken der Ventileinrichtung (23) zum Ventilsitz (20) hin oder von diesem weg umfaßt.

20. Ventil nach Anspruch 19, **dadurch gekennzeichnet, daß** die Einstelleinrichtung (25) durch die Stützeinrichtung gebildet wird und die Stützeinrichtung beweglich ist, um die Ventileinrichtung (23) zum Ventilsitz hin oder von diesem weg zu verschieben.

21. Gasheizgerät mit einem temperaturabhängigen Ventil (1, 41, 71, 80) zum Steuern der Brenngaszufuhr zum Gerät (40, 70) in Abhängigkeit von der Temperatur, **dadurch gekennzeichnet, daß** das temperaturabhängige Ventil (1, 41, 71, 80) ein temperaturabhängiges Ventil (1, 41, 71, 80) nach einem vorhergehenden Anspruch umfaßt, wobei dieses temperaturabhängige Ventil (1, 41, 71, 80) auf die Temperatur des Gerätes (40, 70) anspricht.

22. Gasbetriebenes Handwerkzeug, mit einem Hauptkörperteil (42) aus wärmeleitfähigem Material und einer Verbrennungseinrichtung (49) zum Umwandeln von Brenngas in Wärme zum Heizen des Hauptkörperteils (42), mit einer Brenngaszuführeinrichtung (50, 51) zum Zuführen von Brenngas zur Verbrennungseinrichtung (49), und mit einem temperaturabhängigen Ventil (1, 41, 71, 80) zum Steuern der Brenngaszufuhr von der Brenngaszuführeinrichtung (50, 51) zur Verbrennungseinrichtung (49) in Abhängigkeit von der Temperatur des Hauptkörperteils (42) zum Steuern der Temperatur des Hauptkörperteils (42), wobei das temperaturabhängige Ventil (1, 41, 71, 80) ein Ventilgehäuse (2), das eine Ventilkammer (5) festlegt, eine Einlaßöffnung (13, 73) zur Ventilkammer (5) zur Aufnahme von Brenngas aus der Brenngaszuführeinrichtung (50, 51), eine Auslaßöffnung aus der Ventilkammer (5) zur Abgabe von Brenngas an die Verbrennungseinrichtung (49), eine temperaturabhängige Bimetall-Ventileinrichtung (23) zum Steuern des Brenngasstroms durch die Ventilkammer (5) zwischen der Einlaßöffnung (13, 73) und der Auslaßöffnung (17) in Abhängigkeit von der Temperatur umfaßt, wobei die Ventileinrichtung (23) eine vorbestimmte Übergangstemperatur hat, bei der die Ventileinrichtung (23) von einer ersten Stellung in eine zweite Stellung übergeht, wobei die zweite Stellung im wesentlichen ein Spiegelbild der ersten Stellung ist, **dadurch gekennzeichnet, daß** die Ventileinrichtung (23) von einer Stützeinrichtung (25) an mindestens zwei voneinander beabstandeten Stellen abgestützt wird, die jeweils von der Mitte der Ventileinrichtung (23) beabstandet sind, um die Bewegung der Ventileinrichtung (23) in der Ventilkammer (5) zu begrenzen und damit einen Übergang der Ventileinrichtung (23) von der ersten Stellung in die zweite Stellung zu verhindern, gleichzeitig aber eine begrenzte Bewegung der Ventileinrichtung (23) zum Steuern des Fluidstroms durch die Ventilkammer (5) abhängig von der Temperatur zu gestatten.

23. Verfahren zum Steuern eines Fluidstroms durch eine Ventilkammer (7) eines Ventils (1, 41, 71, 80), wobei das Verfahren die Verwendung einer temperaturabhängigen Bimetall-Ventileinrichtung (23) zum Steuern des Brenngasstroms durch die Ventilkammer (5) abhängig von der Temperatur umfaßt, wobei die Ventileinrichtung (23) eine vorbestimmte Übergangstemperatur hat, bei der sie von einer ersten Stellung in eine zweite Stellung übergeht, und die zweite Stellung im wesentlichen ein Spiegelbild der ersten Stellung ist, **dadurch gekennzeichnet, daß** die Ventileinrichtung (23) zurückgehalten wird, damit ein Übergang der Ventileinrichtung (23) von der ersten Stellung in die zweite Stellung verhindert wird, gleichzeitig aber eine begrenzte Bewegung der Ventileinrichtung (23) zum Steuern des Fluidstroms durch die Ventilkammer (5) in Abhängigkeit von der Temperatur gestattet wird.

## Revendications

1. Soupape thermiquement sensible comprenant un boitier de soupape (2) définissant une chambre de soupape (5), un moyen de soupape (23) bimétallique thermiquement sensible pour commander un écoulement de fluide à travers la chambre de soupape (5) en réponse à une température, le moyen de soupape (23) ayant une température de transition prédéterminée à laquelle le moyen de soupape (23) passe d'une première configuration à une seconde configuration, la seconde configuration étant essentiellement une image miroir de la première configuration, **caractérisé en ce que** le moyen de soupape (23) est supporté par un moyen de support (25) à au moins deux endroits espacés respectivement éloignés du centre du moyen de soupape (23) pour contraindre le mouvement du moyen de soupape (23) dans la chambre de soupape (5) de manière à empêcher le moyen de soupape (23) de passer d'une première configuration à une seconde configuration, mais permettant un mouvement limité du moyen de soupape (23) afin de commander un écoulement de fluide à travers la chambre de soupape (5) en réponse à une température.

2. Soupape comme revendiquée dans la revendication 1 **caractérisée en ce que** le moyen de support (25) supporte le moyen de soupape (23) adjacent à la périphérie de celui-ci.

3. Soupape comme revendiquée dans la revendication 1 ou 2 **caractérisée en ce que** le moyen de support (25) supporte le moyen de soupape (23) à des endroits espacés autour de la périphérie de celui-ci afin de faciliter l'écoulement de fluide d'une face principale du moyen de soupape (23) vers une face principale opposée de celui-ci.

4. Soupape comme revendiquée dans l'une quelconque des revendications précédentes **caractérisée en ce que** le moyen de soupape (23) un disque de soupape circulaire bimétallique (23).

5. Soupape comme revendiquée dans la revendication 4 **caractérisée en ce que** le disque de soupape est un disque non perforé.

6. Soupape comme revendiquée dans l'une quelconque des revendications précédentes **caractérisée en ce que** le moyen de soupape (23) est thermiquement sensible pour commander l'écoulement de fluide à travers la chambre de soupape (5) avec une action de commande analogue.

7. Soupape comme revendiquée dans la revendication 6 **caractérisée en ce que** le moyen de soupape (23) est thermiquement sensible dans une gamme de température prédéterminée adjacente à la température de transition pour commander un écoulement de fluide à travers la chambre de soupape (5).

8. Soupape comme revendiquée dans l'une quelconque des revendications précédentes **caractérisée en ce que** le moyen de soupape (23) est adapté pour avoir une température de transition inférieure et une température de transition supérieure, la température de transition supérieure étant la température à laquelle le moyen de soupape (23) passerait de la première configuration à la seconde configuration lorsque la température augmente si le moyen de soupape (23) serait non contraint, et la température de transition inférieure étant la température à laquelle le moyen de soupape (23), si non contraint, passerait de la seconde configuration à la première configuration lorsque la température chute.

9. Soupape comme revendiquée dans la revendication 8 **caractérisée en ce que** le moyen de soupape (23) est thermiquement sensible dans une gamme de température entre la a température de transition supérieure et la température de transition inférieure pour commander l'écoulement de fluide à travers la chambre de soupape (5) .

10. Soupape comme revendiquée dans l'une quelconque des revendications précédentes **caractérisée en ce que** la forme du moyen de soupape (23) est adapté pour déterminer chaque température de transition prédéterminée.

11. Soupape comme revendiquée dans l'une quelconque des revendications précédentes **caractérisée en ce que** le moyen de soupape (23) est du type qui passerait d'une première vers une seconde configuration avec une action de déclic si non contraint.

12. Soupape comme revendiquée dans l'une quelconque des revendications précédentes **caractérisée en ce que** le moyen de soupape (23) est situé dans la chambre de soupape (5).

13. Soupape comme revendiquée dans l'une quelconque des revendications précédentes **caractérisée en ce que** le boitier de soupape (2) est en matériau conducteur de chaleur , et le moyen de soupape (23) est en communication de transfert de chaleur avec le boitier de soupape (2).

14. Soupape comme revendiquée dans l'une quelconque des revendications précédentes **caractérisée en ce qu'**un port d'entrée (13) est prévu dans la chambre de soupape (5) pour amener un fluide à la chambre de soupape (5), et un port de sortie (17) est prévu à partir de la chambre de soupape (5) pour amener le fluide depuis la chambre de soupape (5), un des ports d'entrée et de sortie (13, 17) définissant un siège de soupape (20), le moyen de soupape (23) coopérant avec le siège de soupape (20) afin de commander l'écoulement de fluide à travers la chambre de soupape (5), le moyen de support (25) pour supporter le moyen de soupape (23) coopérant avec le siège de soupape (20) pour contraindre le moyen de soupape (23) de passer de la première à la seconde configuration.

15. Soupape comme revendiquée dans la revendication 14 **caractérisée en ce que** le moyen de soupape (23) est susceptible de coopérer avec un élément de soupape (21) qui est susceptible de coopérer avec le siège de soupape (20) pour commander un écoulement de fluide à travers la chambre de soupape (5).

16. Soupape comme revendiquée dans la revendication 15 **caractérisée en ce que** l'élément de soupape (21) est susceptible de coopérer avec une portion centrale du moyen de soupape (23) pour commander l'écoulement de fluide à travers la chambre de soupape (5).

17. Soupape comme revendiquée dans la revendication 15 ou 16 **caractérisée en ce que** le moyen de soupape (23) est en flottement libre dans la chambre de soupape (5) à température ambiante.

18. Soupape comme revendiquée dans l'une quelconque des revendications 15 à 17 **caractérisée en ce que** l'élément de soupape (21) coopère avec le moyen de soupape (23) sur une face principale (27) de celui-ci, et le moyen de support (25) coopère avec le moyen de soupape (23) sur la face principale opposée (26).

19. Soupape comme revendiquée dans l'une quelconque des revendications 14 à 18 **caractérisée en ce qu'**un moyen d'ajustement (25) est prévu pour ajuster la gamme de température dans laquelle la soupape (1) est susceptible d'être opérée, le moyen d'ajustement (25) comprenant un moyen pour pousser le moyen de soupape (23) vers ou loin du siège de soupape (20).

20. Soupape comme revendiquée dans la revendication 19 **caractérisée en ce que** le moyen d'ajustement (25) est formé sur le moyen de support, et le moyen de support est mobile pour déplacer le moyen de soupape (23) vers ou loin du siège de soupape (20).

21. Chauffage au gaz comprenant une soupape thermiquement sensible (1, 41, 71, 80) pour commander l'alimentation en gaz de chauffe au chauffage (40,70) en réponse à une température, **caractérisé en ce que** la soupape thermiquement sensible (1, 41, 71, 80) comprend une soupape thermiquement sensible (1, 41, 71, 80) comme revendiquée dans l'une quelconque des revendications précédentes, la soupape thermiquement sensible (1, 41, 71, 80) étant sensible à la température du chauffage (40, 70).

22. Outil manuel entrainé au gaz comprenant organe principal (42) en matériau conducteur de chaleur, et un moyen de combustion (49) pour convertir le gaz de chauffe en chaleur pour chauffer l'organe principal (42), un moyen d'alimentation en gaz de chauffe (50, 51) pour alimenter le gaz de chauffe au moyen de combustion (49), et une soupape thermiquement sensible (1, 41, 71, 80) pour commander l'alimentation de gaz de chauffe à partir du moyen d'alimentation en gaz de chauffe (50, 51) au moyen de combustion (49) en réponse à la température de l'organe principal (42) pour commander la température de l'organe principal (42), la soupape thermiquement sensible (1, 41, 71, 80) comprenant un boitier de soupape (2) définissant une chambre de soupape (5), un port d'entrée (13, 73) à la chambre de soupape (5) pour recevoir le gaz de chauffe à partir du moyen d'alimentation en gaz de chauffe (50, 51), un port de sortie à partir de la chambre de soupape (5) pour délivrer le gaz de chauffe au moyen de combustion (49), un moyen de soupape (23) bimétallique thermiquement sensible pour commander un écoulement de fluide à travers la chambre de soupape (5) entre le port d'entrée (13, 73) et le port de sortir (17) en réponse à une température, le moyen de soupape (23) ayant une température de transition prédéterminée à laquelle le moyen de soupape (23) passe d'une première configuration à une seconde configuration, la seconde configuration étant essentiellement une image miroir de la première configuration, **caractérisé en ce que** le moyen de soupape (23) est supporté par un moyen de support (25) à au moins deux endroits espacés respectivement éloignés du centre du moyen de soupape (23) pour contraindre le mouvement du moyen de soupape (23) dans la chambre de soupape (5) de manière à empêcher le moyen de soupape (23) de passer d'une première configuration à une seconde configuration, mais permettant un mouvement limité du moyen de soupape (23) afin de commander un flux de fluide à travers la chambre de soupape (5) en réponse à une température.

23. Procédé pour commander un écoulement de fluide à travers une chambre de soupape (7) d'une soupape (1, 41, 71, 80), le procédé comprenant de fournir un moyen de soupape (23) bimétallique thermiquement sensible pour commander un écoulement de fluide à travers la chambre de soupape (5) en réponse à une température, le moyen de soupape (23) ayant une température de transition prédéterminée à laquelle le moyen de soupape (23) passe d'une première configuration vers une seconde configuration, la seconde configuration étant essentiellement une image miroir de la première configuration, **caractérisé en ce que** le moyen de soupape (23) est contraint d'empêcher le moyen de soupape (23) de passer de la première configuration à la seconde configuration, mais un mouvement limité du moyen de soupape (23) est permis pour commander un écoulement de fluide à travers la chambre de soupape (5) en réponse à une température.
